# EUROPEAN PATENT APPLICATION

(11) **EP 3 128 468 A1**
(43) Date of publication of application: **08.02.2017**
(21) Application number: 15187154.8
(22) Date of filing: 28.09.2015
(51) Int. Cl.: G06Q 10/02, G06Q 30/08, G06Q 50/12

(54) **AN ACCOMMODATION BOOKING METHOD BY MATCHING GUESTS AND HOSTS PREFERENCES**

(30) Priority: 01.08.2015 IN 4003CH2015
(71) Applicant: Inasra Technologies Private Limited, Chennai 600028, Tamil Nadu (IN)
(72) Inventor: VASUPAL, Yogendra, 600028 Tamil Nadu (IN); SINGH, Ramnique, 600028 Tamil Nadu (IN); ABHIMANYU, -, 600028 Tamil Nadu (IN)
(74) Representative: Maikowski & Ninnemann Patentanwälte Partnerschaft mbB

(57) **Abstract**

The present invention relates to a method by matching guest and host based on parameters. More specifically to find more specific matches, creating compatibility between matched buyers and sellers, and completing a transaction for the business. In one embodiment, this is accomplished by identifying a list of accommodations choices in the geographical location as search results to the query. The results includes 'active' and 'inactive' category. The 'active' category matches the variables about both the service being offered by the host with respect to guest query and the 'inactive' category concealments the host offering those services.

## Description

### Field of the Invention

The present application relate generally to matching guests and hosts based on business oriented parameters, and more specifically to find more specific matches, creating compatibility between matched guest and host, and completing a transaction for the business.

### Background of the Invention

The approaches described in this section are approaches that could be pursued, but not necessarily approaches that have been previously conceived or pursued. Therefore, unless otherwise indicated, it should not be assumed that any of the approaches described in this section qualify as prior art merely by virtue of their inclusion in this section.

Over the past two decades, the internet has proven to be a powerful medium for efficiently enabling collaboration between users for many different purposes, on a global scale. One example is the internet-based travel websites which are used to book travel-related services such as airline tickets, hotel reservations, car rentals, cruises, vacation packages and various attractions via the World Wide Web. Internet-based travel websites may not themselves be direct suppliers of the travel-related services; instead, they may mediate the provision of travel-related services to their customers from contracting travel-service providers.

Several methods are known to mediate and match the buyers with the sellers of various types of services. The quality of matching in product-based marketplace (example: amazon.com, flipkart.com, snapdeal.com, etc) is only about ensuring the buyer gets the best possible match for the product they are looking for. The quality of matching becomes even more important for marketplaces of services (example: housing.com, makemytrip.com, naukri.com etc.) since the buyer and the seller are as important as the service being sold. In such marketplaces, the buyer's decision hinges on a number of aspects of the seller apart from the aspects of the service itself. Hence matching the needs of the sellers and buyers becomes more complicated and important.

Currently, internet-based marketplaces employ a variety of solutions to match buyers and sellers on their platforms.

Curated Results: Here, the platform pre-selects sellers based on certain factors known only to the platform. Such factors could include seller's adherence to platform's terms, quality level and commercial terms. Further, Buyers on these platforms are then offered only these selected sellers on the promise that the seller has already done the selection process on behalf of the buyer. This method puts significant restriction on the number of sellers that can be brought on the platform since the platform must do all the vetting itself. Further, if the platform needs to add a new variable to its judgement matrix, it will have to repeat the entire process all over again which is expensive and time taking.

Filter Based Search: Prospective buyers are shown the full set of results of the category being searched for. For example, when you search of a TV or house on rent, the entire universe of products or services available with the marketplace are shown by default. Buyers are asked to narrow down their search requirements by features of the product or service being offered. For example, for buyers of hotel accommodation, users may be asked to filter their results by star category of hotel, price per night, location and facilities available. Similarly, for buyers looking for houses being offered on rent, the filters utilized may be include house size, budget, locality and property type among others. The possibility of the match being appropriate is left to the buyer depending on the shortlisted results which are shown on the screen after the filters are applied. Examples of such companies include Housing.com, Flipkart.com, Makemytrip.com and Booking.com. This method of filtering only takes into consideration the preferences of the buyer that works very well in a product search scenario but not in a service search scenario. If the seller has restrictions on the type of buyers, a front-end filtering model is unable to handle that complication.

Buyer Location: Certain marketplaces customize their offerings based on where the buyer is accessing the platform. For example, buyers of online food ordering services may see only restaurants in the immediate vicinity of their current location. Examples of such marketplaces include Zomato.com and Foodpanda.com. Similarly buyers in a real estate marketplace are interested in specific geographic areas. Hence, it makes sense for the marketplace to restrict and customize the results by buyer's physical location or their chosen location. Examples of such marketplaces include Housing.com and Commonfloor.com. While physical location is a useful filter for showing relevant results, this method has no relevance in matching guest and host requirements unless physical location is the most important factor in the choice of selection

Previous Purchase Data: Certain marketplaces may customize products shown depending on the user's previous purchase patterns seen on the platform. Such data is often collected automatically and applied algorithmically. For example, visitors to an e-commerce portal may view certain products but not purchase them. Such visitors may be shown relevant ads on their visits to other properties as well as on future visits to the same portal. Examples of such marketplaces include Flipkart.com and Amazon.com. In this method, previous behavior has only limited impact on current and future behavior of any individual and is only a limited view into matching a guest or host with a counterparty in a given transaction, further, previous behavior is relevant only when a user has transacted on the platform a few times which makes it completely irrelevant for all first time users.

Individual Vetting of Buyers: Certain marketplaces allow the seller to individually vet every buyer. Under this process, once a buyer establishes intent to purchase services from a particular seller, the seller contacts the prospective buyer through multiple channels (electronic, phone based, email based or physical meeting) and determines for him or herself if the guest is appropriate for them. Examples of such companies include Airbnb.com (which provide mobile app based communication platform), Quikr.com and OLX.com (which provide phone and mobile app based platform) and Couchsurfing.com (which provides an email based communication platform). This method is highly subjective and the results of such a system depend entirely on the temperament of the host and guest during the vetting process. External factors can affect such systems immensely. Further, since the platform is not involved in the vetting process, it cannot take remedial measures in case one of the parties behaves untruthfully during the process.

Loose Matching on Personal Characteristics: Certain marketplaces collect personal details of the buyers and sellers and create matches based on such personal information. The matches created in such marketplaces are loose. This means that even if a buyer indicates they need a seller from a specific geography, they still may see results from other geographies. Examples of such marketplaces include matchmaking platforms (Shaadi.com, Tinder) and recruitment platforms (Naukri.com). Limitation in this approach is matching system working off only on personal details of the sellers misses entirely the selection methodology of the service itself.

Based on the foregoing, an approach for connecting buying and selling entities that does not suffer from limitations in prior approaches is highly desirable.

In a particular example of travellers who often need accommodations. Lodging may be expensive and/or availability may be limited. For example, travel planned on short notice may not offer enough time to book reservations in hotels. The travelers may not know in advance which nights they will need the accommodations, which may further limit the travelers' options. Moreover, the travelers may prefer to stay in a home-like setting or lease privately owned property, such as a home. For example, the travelers may prefer a home-like ambience. The home-like ambience may offer a "personal touch" of friendly hosts, including opportunities to build lasting friendships. Amenities may include home cooked meals, pet accommodations, childcare opportunities, attractive lease rates, and residential neighbourhood settings. The travelers, however, may not be able to locate such accommodations. Conversely, the hosts may not have a venue to offer such accommodations. Thus, both travelers and hosts may miss mutually rewarding accommodation opportunities. Particularly one must ensure that the Host and the Guest are compatible apart from the property meeting the Guest's requirements due to the following reasons: Unlike hotels, Hosts often share the same physical space as the Guests which means they often have a number of serious concerns of who is staying in their house. Further, Hosts have a strong preference regarding the composition of Guest groups they host - singles, men/women, families, elders, children, pets, business / leisure travellers, etc. Further, Hosts provide the service themselves which makes their fluency in the Guest's language a critical factor. Furthermore, Hosts often share their kitchen with the Guests which makes the Guests' eating habits a critical factor

Thus there is a need in the art to address the above mentioned problem.

### Summary of the Invention

The following presents a simplified summary of several embodiments of the invention in order to provide a basic understanding of such embodiments. This summary is not an extensive overview of all contemplated embodiments of the invention, and is intended to neither identify key or critical elements of all embodiments, nor delineate the scope of any or all embodiments. Its purpose is to present some concepts of one or more embodiments in a simplified form as a prelude to the more detailed description that is presented later.

Accordingly, in one aspect of the present invention relates to an accommodation booking method for matching guests and hosts preferences, the method including registering profile information of one or more guest and one or more host in a computer server via a user interface. The profile information including but not limited to name, address or physical location, budget, product of interest, type of accommodation, categories of interest, schedule etc.. Further, the method receives a search query from a guest for accommodation, the search query may include a geographical location and a date range. The method identifies a list of accommodations choices in the geographical location as search results to the query and displaying the same, where the displayed results includes at least two category of service, ACTIVE and the other is INACTIVE. The 'active' category matches the variables about both the service being offered by the host with respect to guest query and the 'inactive' category conceals the host offering those services. The method further allows the guest to purchase the service from the ACTIVE category, wherein the active category results are based on the preference set by the seller which they are comfortable dealing with guest. Furthermore, the method allows the guest only to view the services which are offered under the INACTIVE category.

Other aspects and features, as recited by the claims, will become apparent to those skilled in the art upon review of the following non-limited detailed description of the invention in conjunction with the accompanying figures.

### Brief description of the drawings

Having thus described embodiments of the invention in general terms, reference will now be made to the accompanying drawings, wherein:
FIG. 1 is a block diagram of a system architecture suitable for implementing the processes described herein, according to an embodiment.
FIG. 2 show a flow chart of an exemplary method for matching guests and hosts preferences, in accordance with one embodiment of the invention.
FIG. 3 is a block diagram of a computer system suitable for implementing one or more components in FIG. 1, according to an embodiment.

Embodiments of the present disclosure and their advantages are best understood by referring to the detailed description that follows. It should be appreciated that like reference numerals are used to identify like elements illustrated in one or more of the figures, wherein showings therein are for purposes of illustrating embodiments of the present disclosure and not for purposes of limiting the same.

### Detail description of the invention

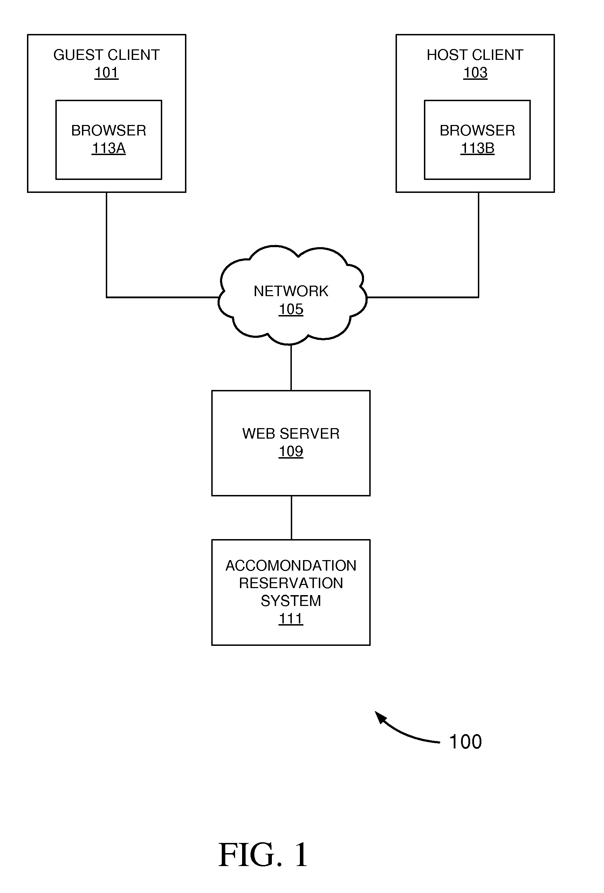

Referring now to FIG. 1, there is shown the system architecture adapted to support one embodiment of the present invention. FIG. 1 and the other figures use like reference numerals to identify like elements. A letter after a reference numeral, such as "113A," indicates that the text refers specifically to the element having that particular reference numeral. A reference numeral in the text without a following letter, such as "113," refers to any or all of the elements in the figures bearing that reference numeral (e.g. "113" in the text refers to reference numerals "113A" and/or "113B" in the figures).

The network 105 represents the communication pathways between the guest 101, the host 103 and the accommodation reservation system 111. In one embodiment, the network is the Internet. The network can also utilize dedicated or private communication links (e.g. WAN, MAN, or LAN) that are not necessarily part of the Internet. The network uses standard communications technologies and/or protocols.

The web server 109 presents web pages or other web content, which form the basic interface to the guest and host clients 101, 103. The guests and hosts use respective client devices 101, 103 to access one or more web pages, and provide data to the accommodation reservation system 111. In the context of this application, "data" is understood to include information about an accommodation, information about a trip, the host, the guest, and the like. For example, for information related to an accommodation, the data can include information such as price, room type, bed type, number of bedrooms, number of bathrooms, cleaning fee, check in time, check out time, location, size, cancellation policy, amenities, house rules, and the like. Also, for information about a trip, data can include information such as location, check in date, check out date, number of guests, room type preference, price range, desired amenities, and the like.

A guest is one type of user of the accommodation reservation system 111. Guests request accommodation from the accommodation reservation system 111 based on a set of trip parameters using a guest client device 101. The accommodation reservation system 111 then provides a list of potential accommodations that best match the trip parameters provided by the guest.

The host is another type of user of the accommodation reservation system 111. Host provides accommodation through the accommodation reservation system 111 based on a set of accommodation parameters using a host client device 103. The accommodation reservation system 111 lists the accommodations along with the accommodation parameters provided by the host. The accommodation reservation system 111 then tries to match the listed accommodation to one or more guests that may identify the listed accommodation suitable to their needs.

In one embodiment, the client devices 101, 103 are used by the guest and hosts for interacting with the accommodation reservation system 111. A client device can be any device that is or incorporates a computer such as a personal computer (PC), a desktop computer, a laptop computer, a notebook, a smartphone, an internet-connected television, an internet connected watch, internet connected wearables or the like. A computer is a device having one or more general or special purpose processors, memory, storage, and networking components (either wired or wireless). The device executes an operating system, for example, a Microsoft Windows-compatible operating system (OS), Apple OS X or iOS, a Linux distribution, Google's Android OS and the like. In some embodiments, the client device 101, 103 may use a web browser 113, such as Microsoft Internet Explorer, Mozilla Firefox, Google Chrome, Apple Safari, Opera and the like, as an interface to interact with the accommodation reservation system 111.

The accommodation reservation system 111 allows hosts to post accommodation listing and guests to search for and book accommodations. The accommodation reservation system 111 comprises additional components and modules that are described below.

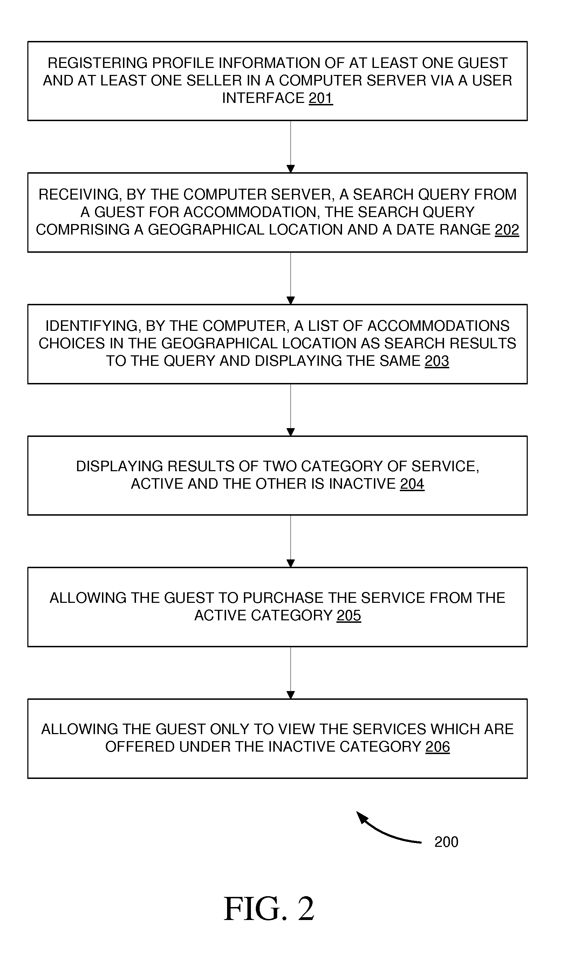

FIG. 2 show a flow chart of an exemplary method 200 for matching guests and hosts preferences, in accordance with one embodiment of the invention.

At step 201, the method registers profile information of at least one guest and at least one seller in a computer server via a user interface. The profile information including but not limited to name, address or physical location, budget, product of interest, type of accommodation, categories of interest, schedule etc. In addition of the above, the registration process includes allowing the host to indicate the selection of choices of guest based on a set of questions requested about the kind of guests they are comfortable dealing with.

At step 202, the method receives a search query from a guest for accommodation by the computer server. In an example embodiment, the search query may be or may include a geographical location and a date range.

At step 203, the method identifies a list of accommodations choices in the geographical location as search results to the query and displaying the same to the guest. In an example embodiment, the method seeks variables about the guest's traits and characteristics to enable matches to the hosts' preferences and determines compatible matches based on traits and characteristics of the host, the guest and the service being offered by the host.

The results displayed includes information about the accommodation, in which the accommodation listing are of under the category of service, ACTIVE and the other is INACTIVE, at step 204. The 'active' category matches the variables about both the service being offered by the host with respect to guest query and the 'inactive' category concealments the host offering those services. Based on the selection (new) of choice by the guest, the method dynamically changes the status of search results from 'active' to 'inactive' or vice-versa.

At step 205, the method allows the guest to purchase the service from the ACTIVE category, where the active category results are based on the preference set by the seller which they are comfortable dealing with guest. The search results under 'ACTIVE' category recites that matches the preference or variable set by the guest during their registration with the host preference or variable which are pre-set by the host.

At step 206, the method allows the guest only to view the services which are offered under the INACTIVE category. The search results under "INACTIVE" category recites that preference or variable made by the guest does not match with the host preference or variable.

The above mentioned method broadly divided into three parts:
(a) The Backend consists of the set of instructions and code that runs in the background and determines which buyer gets matched to which set of seller
(b) The Buyer Frontend consists of the on-screen choices and navigation available to every prospective buyer on this platform (including but not limited to mobile apps, mobile site, website and other future platforms). This also includes the logical layer which determines the set of purchase choices shown to the buyer at every step of the search process
(c) The Seller Frontend consists of the choices offered to a seller on this platform (including but not limited to paper based, mobile apps, mobile site, website and other future platforms). This also includes the method in which such choices are displayed and the actual content of the choices offered

Under this method, every seller is given access to the Seller Frontend where they indicate their selection of choices based on a set of questions asked about the kind of buyers they are comfortable dealing with. This set of choices is fed (either manually or automatically) into the Backend. The Backend consists of a set of rules that determine the universe of choices shown on the Buyer Frontend. When a buyer lands up on the Buyer Frontend, they are shown a superset of results coming from the Backend. The buyer interacts with the various control options provided on the Buyer Frontend. Depending on the choices made on these control options, individual results in the superset of results change their status from 'Active' to 'Inactive' and vice-versa. The buyer can choose to purchase the service from among the 'Active' set even as they can view the 'Inactive' set. The Backend strictly controls the set displayed as 'Active' at any given point during the search process. This means if the seller has indicated that buyers who satisfy feature A not be allowed, the Backend will ensure that all buyers who satisfy feature A are always shown that seller / service as 'Inactive'.

From the buyer's perspective, the present method matches variables about both the service being offered as well as the seller offering those services.

From the seller's perspective, the present method seeks variables about the buyer's traits and characteristics (including but not limited to group size, intent of travel, eating habits, etc.) to enable matches to the seller's preferences.

The present method also determines compatible matches based on traits and characteristics of the seller, the buyer and the service being offered. Moreover, the method creates significantly more intimate matches than all current marketplaces as the seller and buyer's personal traits are inextricably involved in the process.

The present method is absolute when it comes adhering to choices indicated by the seller. This ensures that no seller or buyer is ever matched to a counterparty that they have explicitly asked to avoid.

### Working Example:

Stay owners (service providers) will be able to set rules for guests. Whenever search results are displayed in the application, stays which have rules associated with them are shown as locked. The user will have to answer questions in order to unlock those results. This process will make the guests and stay owners experience very smooth, as there will be more compatibility between them.

The process involves asking user some questions. The conditions set by the stay owners are then tallied with the answers provided by the user. Depending on the answers of user and conditions of the stay owner, the certain property is either unlocked or remains locked. The following example demonstrates it.

### Rulesets

The rules, which the stay owner can set to his property, are saved in a hierarchical format. An example of this would be as follows. The stay owner will get an opportunity to set as many conditions he wants within the overall number of traits that the server allows.

### Questions and Preferences (As shown to the user):

### ID: 1

### Question: "What kind of Traveler you are?"

Options:
1. Only Man
2. Only Woman
3. Couple
4. Family
5. Senior Citizens

### ID: 1

### Question: "What are your food preferences?"

Options:
1. Vegan
2. Veg
3. Non-Veg

And so on. The server creates the questions as well as the responses and presents the same to the host. The host is allowed to select the question from the plurality of questions presented to the host by the server. On every selection of question, the host must specify which responses they find acceptable, which is not acceptable and which the host do not care about the responses. He/she can go on to specify Language, Amenities, Food and a host of other condition he wants to impose on the guests. If he chooses guests to be only purely veg family type, he is ensured that users having different or undesirable characteristics do not land up at their property.

### Rulesets for Hotel

Rules for each stay are stored in a hierarchical format which supports parsing. Each rule comprises of a question followed by whitelist and blacklist options. The whitelist options are the ones which are desirable by the stay owner. The undesirable ones are showed in the blacklist options. Once the hotel owner specifies the rules for his property using the above mechanism, the data is saved. A hotel owner can change his priorities any day he wants. Here is an example list of hotels and their rules which they have applied on the user.

### Hotels, its details and preferences:

1. Hotel No: 1
   Hotel Name: "Hotel YZ"
   Rules:
   1. What kind of traveller you are?
      Whitelisted Options: Family, Couple → (This means the stay owner only wants family and couple type guests. Bachelors not allowed)
      Blacklisted Options: Senior Citizens → (This means that a senior citizen family will not preferable)
   2. What are your food preferences?
      Whitelisted Options: Veg, NonVeg
      Blacklisted Options: Vegan
2. Hotel No: 2
   Hotel Name: "Hotel ABC"
   Rules:
   1. What kind of traveler you are?
      Whitelisted Options: Family
      Blacklisted Options: Single Girls
   2. What are your food preferences?
      Blacklisted Options: NonVeg
   3. What are your language preferences?
      Blacklisted Options: Hindi → (Non Hindi Speakers aren't allowed)
3. Hotel No. 3
   Hotel Name: "Hotel Alwin"
   Rules: Empty (Guests of all types are allowed)

### Fetching stay rulesets on the client

The user can now proceed to search stays. The search result comprises of hotels/stays and their rulesets. The stays which specify certain rulesets are shown blocked.

Because of the following two policies:
- All stays matching search criteria are fetched at once.
- Unlock questionnaire is only shown once per search.

Hence the rules relating to all the stays of the search are fetched at once. The user searches in a particular location. An example search is listed below.

| Search Stays |
|---|
| Location: Chennai, Tamil Nadu, India |
| Check In Date: 14/05/2015 // → DD/MM/YYYY format |
| check Out Date: 22/05/2015 |
| Latitude: 13.0826802 // → Computed automatically |
| Longitude: 80.27071840000008 // → Computed automatically |

The hotel list is fetched along with their rules. An example:
Search Location: Chennai, Tamil Nadu, India

### Results:

1. Hotel No: 1
   Hotel Name: "Hotel YZ"
   Rules:
   1. What kind of traveller you are?
      Whitelisted Options: Family, Couple
      Blacklisted Options: Senior Citizens
   2. What are your food preferences?
      Whitelisted Options: Veg, NonVeg
      Blacklisted Options: Vegan
   2. Hotel No: 2
   Hotel Name: "Hotel ABC"
   Rules:
   1. What kind of traveller you are?
      Whitelisted Options: Family
      Blacklisted Options: Single Girls
   2. What are your food preferences?
      Blacklisted Options: Non-Veg
   3. What are your language preferences?
      Blacklisted Options: Hindi
3. Hotel No. 3
   Hotel Name: "Hotel Alwin"
   Rules: Empty

### Explanation for the above hotels

Consider that there are only 3 stays in Chennai.
- Stay 1 owner - Only Family, Couple allowed but no Senior Citizens. Vegans not allowed
- Stay 2 owner - Only Family allowed. Single girls, Hindi and Non vegetarians not allowed
- Stay 3 owner - Any guest.

When a user searches stays in Chennai, he will get a result set of 3 stays in the following state:
- Stay 1 - locked
- Stay 2 - locked
- Stay 3 - unlocked

The user is able to view the unlocked properties. But when they try to view a locked property (Stay 1 and 2), they are prompted to answer the following questionnaire:
- What languages do you speak?
   ○ [] Hindi
   ○ (x) Other / None of the above
- What is the purpose of your visit?
   ○ [] Business
   ○ [] Vacation
   ○ (x) Other / None of the above

As seen, the questions and possible answers are built from the rules of the stay result set i.e. this questionnaire comes up only once, irrespective of which locked stay the user attempts to view and the user must answer all the questions.

### Suppose the user answers as below: (x marks selection)

- What languages do you speak?
   ○ [x] Hindi
   ○ [] Tamil
   ○ () Other / None of the above
- What kind of traveler you are?
   ○ [] Family
   ○ [] Couple
   ○ [] Senior Citizen
   ○ [x] Single Girls
   ○ () Other / None of the above
- What are your food preferences?
   ○ [] Veg
   ○ [x] Non Veg
   ○ [] Vegan
   ○ () Other / None of the above

### Unlocking properties on the client

Whenever a user clicks on any locked property in a result set, the client will prepare a questionnaire using the rulesets of all stays. All answers are multiple choice. Once the form is submitted, the properties that have been fetched so far and qualify are unlocked. Those which don't qualify are removed from the view permanently (for this search). It is possible that the user might click on a locked stay before all stays have been fetched, and will still answer all the questions that will affect incoming stays i.e. upon receiving the next batch, the client will lock / hide properties based on the answers already given by the user. It's worth noting that this way, the user will not be able to guess which answers / questions unlock which stay.

### Step by step algorithm to see if a particular hotel can be unlocked for a user or not

1. Step 1 - Check if hotel/stay has specified any rule
   a. If NO rules are specified, the hotel is unlocked. **Checking Over**.
   b. If a rule is specified, proceed to step 2.
2. Step 2 - Check if the hotel has whitelisted preferences.
   a. If no whitelists, then proceed to step 3.
   b. If whitelist is there, check
      i. User's characteristics matches any whitelist property, the property is unlocked. Proceed to step 3.
      ii. User's characteristics matches none of whitelist, the hotel is blocked. **Checking Over**
3. Step 3 - Check if the hotel has blacklisted preferences.
a. If no blacklists, the hotel is unlocked. **Checking Over.**
b. If blacklist is there, check
   i. User's characteristics matches any blacklist property, the property is blocked. **Checking Over.**
   ii. User's characteristics matches none of blacklist, the hotel is unlocked.

So the above method will decide whether to block a property or not.

In the example above, stay 1 will be unlocked. Stay 2 will remain locked and will be removed from the result set as the user no longer qualifies for that stay. Stay 3 has no rules. Always unlocked.

### Advantages

1. Every seller and buyer on the platform is guaranteed to get the counterparties of their choice.
2. The method removes the need for the seller to meet every individual buyer
3. Search and booking times get reduced significantly since the buyer only sees properties which fit his/her profile thereby reducing unproductive exercises
4. Highly trustworthy system which provides trust and security to vulnerable buyer segments (families with small children, elders, women only groups) from incompatible sellers
5. The structure is highly scalable and can be quickly and cheaply extended millions of buyer and sellers.

### Applications

The present method can be applied to any internet-based marketplace for services where the service being offered and the seller of the service are inextricably linked to each other.

Possible uses of the method includes but limited to the following:
Homestay Marketplace: Short-term accommodation being offered by individuals where they open up their current homes for guests. Such a marketplace must ensure the Guest profile is strongly matched to the Host preferences since the Host and Guest will be occupying the same physical space during the stay. Incompatibility between the two will lead to high rates of dissonance and high dissatisfaction rates
Real Estate Platforms: Platforms that offer houses available for rent or paying guests can utilize the present method. When renting a place, the tenant has strong preferences about the kind of person the landlord is. The landlord has equally strong preferences about the kind of person the tenant is. In such platforms, the method must be able to go beyond preferences and consider either person's traits. As no platform currently includes such a method, all current real estate platforms have very high rejection rates
Used Goods Marketplace: Buyers of used goods often require more information than product features of the product being sold. The background of the seller, the reasons for selling and other traits are important variables from the seller's side for almost all used goods. Similarly, for certain category of goods, the profile of the buyer becomes important. Such categories include art, vintage cars and other such collector items
Platforms Offering Professional Services: Buyers on platforms that sell professional services - both low value (home technicians, plumbers, trainers, etc.) and high value (chartered accountants, consultants) - have strong preferences about the seller as much as about the service itself. The sellers also have strong preferences about the profile of the buyer since they occupy the same physical space as the buyer during delivery of the service opening them up to payment and physical injury risks
Other Service Marketplace: Any marketplace which offers services which are closely linked to their sellers requires close matching of their buyers and sellers. The present method can easily be applied to such platforms

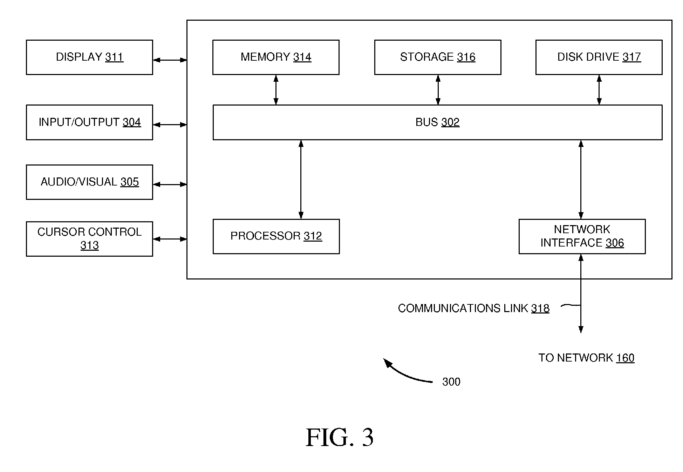

FIG. 3 is a block diagram of a computer system suitable for implementing one or more components in FIG. 1, according to an embodiment. In various embodiments, the user device may comprise a personal computing device (e.g., smart phone, a computing tablet, a personal computer, laptop, PDA, Bluetooth device, key FOB, badge, etc.) capable of communicating with the network. The merchant server and/or service provider may utilize a network computing device (e.g., a network server) capable of communicating with the network. It should be appreciated that each of the devices utilized by users and service providers may be implemented as computer system 300 in a manner as follows.

Computer system 300 includes a bus 302 or other communication mechanism for communicating information data, signals, and information between various components of computer system 300. Components include an input/output (I/O) component 304 that processes a user action, such as selecting keys from a keypad/keyboard, selecting one or more buttons, image, or links, and/or moving one or more images, etc., and sends a corresponding signal to bus 302. I/O component 304 may also include an output component, such as a display 311 and a cursor control 313 (such as a keyboard, keypad, mouse, etc.). An optional audio input/output component 305 may also be included to allow a user to use voice for inputting information by converting audio signals. Audio I/O component 305 may allow the user to hear audio. A transceiver or network interface 306 transmits and receives signals between computer system 300 and other devices, such as another user device, a merchant server, or a service provider server via network 160. In one embodiment, the transmission is wireless, although other transmission mediums and methods may also be suitable. One or more processors 312, which can be a micro-controller, digital signal processor (DSP), or other processing component, processes these various signals, such as for display on computer system 300 or transmission to other devices via a communication link 318. Processor(s) 312 may also control transmission of information, such as cookies or IP addresses, to other devices.

Components of computer system 300 also include a system memory component 314 (e.g., RAM), a static storage component 316 (e.g., ROM), and/or a disk drive 317. Computer system 300 performs specific operations by processor(s) 312 and other components by executing one or more sequences of instructions contained in system memory component 314. Logic may be encoded in a computer readable medium, which may refer to any medium that participates in providing instructions to processor(s) 312 for execution. Such a medium may take many forms, including but not limited to, non-volatile media, volatile media, and transmission media. In various embodiments, non-volatile media includes optical or magnetic disks, volatile media includes dynamic memory, such as system memory component 314, and transmission media includes coaxial cables, copper wire, and fiber optics, including wires that comprise bus 302. In one embodiment, the logic is encoded in non-transitory computer readable medium. In one example, transmission media may take the form of acoustic or light waves, such as those generated during radio wave, optical, and infrared data communications.

Some common forms of computer readable media includes, for example, floppy disk, flexible disk, hard disk, magnetic tape, any other magnetic medium, CD-ROM, any other optical medium, punch cards, paper tape, any other physical medium with patterns of holes, RAM, PROM, EEPROM, FLASH-EEPROM, any other memory chip or cartridge, or any other medium from which a computer is adapted to read.

In various embodiments of the present disclosure, execution of instruction sequences to practice the present disclosure may be performed by computer system 300. In various other embodiments of the present disclosure, a plurality of computer systems 300 coupled by communication link 318 to the network (e.g., such as a LAN, WLAN, PTSN, and/or various other wired or wireless networks, including telecommunications, mobile, and cellular phone networks) may perform instruction sequences to practice the present disclosure in coordination with one another.

Where applicable, various embodiments provided by the present disclosure may be implemented using hardware, software, or combinations of hardware and software. Also, where applicable, the various hardware components and/or software components set forth herein may be combined into composite components comprising software, hardware, and/or both without departing from the spirit of the present disclosure. Where applicable, the various hardware components and/or software components set forth herein may be separated into sub-components comprising software, hardware, or both without departing from the scope of the present disclosure. In addition, where applicable, it is contemplated that software components may be implemented as hardware components and vice-versa.

Software, in accordance with the present disclosure, such as program code and/or data, may be stored on one or more computer readable mediums. It is also contemplated that software identified herein may be implemented using one or more general purpose or specific purpose computers and/or computer systems, networked and/or otherwise. Where applicable, the ordering of various steps described herein may be changed, combined into composite steps, and/or separated into sub-steps to provide features described herein.

The foregoing disclosure is not intended to limit the present disclosure to the precise forms or particular fields of use disclosed. As such, it is contemplated that various alternate embodiments and/or modifications to the present disclosure, whether explicitly described or implied herein, are possible in light of the disclosure. Having thus described embodiments of the present disclosure, persons of ordinary skill in the art will recognize that changes may be made in form and detail without departing from the scope of the present disclosure. Thus, the present disclosure is limited only by the claims.

## Claims

1. An accommodation booking method by matching guests and hosts preferences, the method comprising:
registering profile information of at least one guest and at least one seller in a computer server via a user interface, wherein the profile information including name, address or physical location, budget, product of interest, type of accommodation, categories of interest, schedule etc.;
receiving, by the computer server, a search query from a guest for accommodation, the search query comprising a geographical location and a date range;
identifying, by the computer, a list of accommodations choices in the geographical location as search results to the query and displaying the same, wherein the displayed results includes at least two category of service, ACTIVE and the other is INACTIVE,
wherein the 'active' category matches the variables about both the service being offered by the host with respect to guest query and the 'inactive' category conceals the host offering those services.

2. The method of claim 1, further comprising:
allowing the guest to purchase the service from the ACTIVE category, wherein the active category results are based on the preference set by the seller which they are comfortable dealing with guest; and
allowing the guest only to view the services which are offered under the INACTIVE category.

3. The method of claim 1, wherein the computer server seeks variables about the guest's traits and characteristics to enable matches to the hosts' preferences and determines compatible matches based on traits and characteristics of the host, the guest and the service being offered by the host.

4. The method of claim 1, further comprising:
dynamically changing the status of search results from 'active' to 'inactive' or vice-versa based on each new selection or any alteration in the selection of choice by the guest.

5. The method of claim 1, wherein the search results under 'ACTIVE' category recites that matches the preference or variable set by the guest during their registration with the host preference or variable which are pre-set by the host.

6. The method of claim 1, wherein the search results under "INACTIVE" category recites that preference or variable made by the guest does not match with the host preference or variable.

7. The method of claim 1, further comprising:
if the guest is willing to avail the service which are under the 'inactive' category, prompting the guest to answer conditional questionnaire pre-set by the seller in order to make the service 'active'.

8. The method of claim 1, wherein the step of registration of host further including:
allowing the host to indicate the selection of choices of guest based on a set of questions requested about the kind of guests they are comfortable dealing with.

9. An accommodation computer server, comprising:
a computer processor;
a search module executed by the processor and configured to:
registering profile information of at least one guest and at least one seller, wherein the profile information including name, address or physical location, budget, product of interest, type of accommodation, categories of interest, schedule etc.;
receiving a search query from a guest for accommodation, the search query comprising a geographical location and a date range;
identifying a list of accommodations choices in the geographical location as search results to the query and displaying the same, wherein the displayed results includes at least two category of service, ACTIVE and the other is INACTIVE, wherein the 'active' category matches the variables about both the service being offered by the host with respect to guest query and the 'inactive' category concealments the host offering those services;
allowing the guest to purchase the service from the ACTIVE category, wherein the active category results are based on the preference set by the seller which they are comfortable dealing with guest;
allowing the guest only to view the services which are offered under the INACTIVE category; and
dynamically changing the status of search results from 'active' to 'inactive' or vice-versa based on each new selection or any alteration in the selection of choice by the guest.

10. An accommodation booking platform by matching guest and host preferences, the platform including:
at least one host client system and at least one guest client system with necessary hardware and software;
at least one computer server with necessary hardware and software and coupled to a database for storing data; and
a network connecting said at least one host client system and said at least one guest client system to said at least one computer server,
wherein said at least one computer server is configured for:
registering profile information of at least one guest and at least one seller in the computer server via a user interface, wherein the profile information including name, address or physical location, budget, product of interest, type of accommodation, categories of interest, schedule etc.;
receiving, by the computer server, a search query from a guest for accommodation, the search query comprising a geographical location and a date range;
identifying, by the computer, a list of accommodations choices in the geographical location as search results to the query and displaying the same, wherein the displayed results includes at least two category of service, ACTIVE and the other is INACTIVE,
wherein the 'active' category matches the variables about both the service being offered by the host with respect to guest query and the 'inactive' category concealments the host offering those services.
allowing the guest to purchase the service from the ACTIVE category, wherein the active category results are based on the preference set by the seller which they are comfortable dealing with guest; and
allowing the guest only to view the services which are offered under the INACTIVE category.
